# EUROPEAN PATENT SPECIFICATION

(11) **EP 1 941 317 B1**
(45) Date of publication and mention of the grant of the patent: **15.12.2010**
(21) Application number: 06806211.6
(22) Date of filing: 12.10.2006
(51) Int. Cl.: B23K 26/06, G02B 27/09, G02B 27/10

(54) **BEAM SEPARATING OPTICAL ELEMENT**
STRAHLTRENNENDES OPTISCHES ELEMENT
ELEMENT OPTIQUE DE SEPARATION DE FAISCEAUX

(30) Priority: 28.10.2005 US 731539 P
(43) Date of publication of application: 09.07.2008
(73) Proprietor: Carl Zeiss Laser Optics GmbH, 73447 Oberkochen (DE)
(72) Inventor: LE MAIRE, Michel, 73447 Oberkochen (DE); TRITSCHLER, Thorsten, 73430 Aalen (DE); SHKLOVER, Vitaly, 89551 Königsbronn (DE); MÜNZ, Holger, 73433 Aalen (DE); EGGER, Rafael, 81927 München (DE); DERST, Gerhard, 73431 Aalen (DE)
(74) Representative: Braunger, Dieter
(86) International application number: PCT/EP2006/009852
(87) International publication number: WO 2007/048507

(56) References cited:
- DE-A1- 10 033 786
- DE-A1- 19 910 725
- US-A- 5 083 852
- US-A- 5 161 238
- US-A- 5 237 149
- US-A- 5 331 466
- US-A- 5 721 416
- US-A1- 2002 154 424
- US-A1- 2003 068 836
- US-A1- 2005 219 713

## Description

### BACKGROUND OF THE INVENTION

The invention relates to a beam separating optical element for limiting an illuminating field of an incident optical beam. The invention further relates to a laser annealing apparatus for crystallization of a semiconductor thin film, e.g. an amorphous silicon layer on a panel.

The invention generally relates to beam shaping of high power light sources or high power optical systems which are, for example, used in laser annealing of substrates.

The invention in particular relates to flat screen or thin film solar cell processing techniques including a laser annealing process.

According to the state of the art flat screens are generally controlled using the so called active-matrix-(AM) or the thin film transistor-technology (TFT). This technology is based on polycrystalline silicon. Polycrystalline silicon thin films may be reproducibly fabricated by scanning a homogenised laser beam forming a sharp illuminating line over a substrate which is covered with amorphous silicon (a-Si). The laser beam is emitted by a high-intensity laser, such as an excimer laser with high intensity ultraviolet radiation. The dimensions of the laser beams emitted by the laser apparatus typically are some hundreds of millimetres in the long direction and not more than ten microns in the short direction. The laser beam is absorbed on the surface of the thin amorphous silicon layer having a thickness of around 50-150 nm without significant heating the substrate and without destruction of the substrate. The passing laser beam locally melts the amorphous silicon film. During cool down of the molten film silicon solidifies by forming polycrystalline silicon (p-Si) as desired.

Burghardt und Kahlert (US 5,721,416) disclose an optical device for generating a sharp illuminating line on an illumination plane from a high-power laser beam, which may be used for such a crystallization process. The sharp illuminating line includes long and short axis. The optical device comprises an anamorphic set up of imaging and homogenizing optical systems for imaging and homogenizing of the laser beam in the directions of the long and short axis. The drawings of this document show a rectangular field stop, which is arranged in the optical device in the propagation direction of the laser beam. In the direction of the short axis this rectangular field stop forms a comparably small slit having the dimension of a fraction of a millimetre. In the direction of the long axis the clearance is of some orders of magnitudes higher. In the direction of the short axis the narrow slit is illuminated homogeneously in an efficient manner (i.e. making the best possible use of radiation energy supplied by the laser). The slit is imaged on said illumination plane by means of a reducing optics, which is telecentric at the image side. The laser beam is not focussed on the slit mentioned, in respect of the long axis of the illumination line. Instead, it is imaged directly on the illumination plane, i.e. the plane in which the illuminating line is to be formed on the substrate, which is to be subjected to be processed.

Despite this optical homogenization and imaging system described above will work quite well, US 5,721,416 does not disclose any hint how to eliminate the radiation energy of the laser beam being blocked by said rectangular field stop. Furthermore, this document does not show how the radiation energy being blocked by said field stop may be limited to a degree not destroying said field stop and always to make sure that sufficient radiation energy contributes to the illumination line, i.e. making always the best possible use of radiation energy supplied by the laser.

Mehmke (US 5,161,238) discloses an apparatus for limiting laser beams of median or high power. The apparatus disclosed therein comprises a diaphragm which is mirrored and which is arranged with respect to the laser beam in such a manner that the beam portions reflected by the diaphragm are directed away from the laser beam axis.

The mirrored surfaces of such a field stop in general consist of a dielectric coating the thickness of which will vary near the edges. Such variations in thickness implicate that no sharp edge of the laser beam may be generated. Furthermore, a quite huge beam dump is necessary which collects the laser beam reflected by the mirrors and which dissipates the residual energy.

According to the US 5,161,238 in the prior art for confining the laser beam diaphragms of the absorptive type are also well known. Such diaphragms absorb the non-required parts of the laser beams. Such diaphragms involve however problems when the power of laser lies in the medium or higher range, i.e., if the energy density is higher than 50 mJ/cm² or if the power density exceeds 150kW/cm². Such diaphragms can become very hot and may assume temperatures of more than one hundred degrees centigrade. This heating of the diaphragms leads to a heating of the environment and as a result striae (i.e. gas density fluctuations) formation of, e.g., the surrounding air can occur at the edges. Such striae may disturb the linear propagation of the laser beam.

US 2005/219713 A1 discloses an optical device with a beam separating optical element in the form of an aperture stop for limiting an illuminating field of an incident optical beam. The aperture stop is made of an at least partially transparent material and comprises a first surface and a second surface enclosing an angle and together forming an edge. The incident optical beam is separated into two sub-beams by the edge and one sub-beam is reflected by a surface of the aperture stop. Thereby the optical device is capable of handling higher power laser beams without shape or dimension variations of the blocking aperture.

Furthermore, such diaphragms of the absorptive type are very often formed using razor-blade-like objects having quite linear and sharp edges. Using such diaphragms as beam separating optical element s for limiting the expansion of an illuminating line with a high aspect ratio in the short axis direction in a large scale laser silicon crystallization setup poor crystal growth has been found Furthermore, a tendency to destruction of the razor-blade-like diaphragms due to increased light energy entry when blocking the light beam partially in the short axis direction has been observed.

### SUMMARY OF THE INVENTION

It is an object of the present invention to provide a beam separating or field confining optical element for limiting or confining an illuminating field of an incident optical beam which may be used to create a line beam having extensions in perpendicular first and second dimensions (named long and short axis directions) transverse to its propagation direction for the production of homogeneous polycrystalline silicon films on a large scale when transferring said line beam in the direction of the short axis along a substrate coated with a thin amorphous silicon film.

It is a further object of the present invention to provide a beam separating or field confining optical element for limiting or confining an illuminating field of an incident optical beam which has a lower tendency to failure due to increased heat impact during illumination by a high power light source.

It is another object of the present invention to provide an optical device for generating a sharp illuminating line on a panel, said illuminating line being generated from a laser beam emitted by a high power laser and having a cross-section with long and short axes and where the shape of said illuminating line is also guaranteed in cases of high aspect ratios exceeding 10 µm x 730 mm.

It is still another object of the present invention to provide a laser annealing apparatus for crystallization of an amorphous silicon layer on a panel which allows the production of polycrystalline silicon films with improved crystal quality even on a large scale.

It has been found that in some cases it is not possible to reduce heat impact to a beam separating optical element only by using a reflective type element. In particular, if there is not enough space for arranging a beam dump or for reflecting the undesired blocked beam a beam separating optical element of the absorptive type will be used. In this case a person skilled in the art will as a first choice use razor-blade-like objects as mentioned above. Detailed examinations led to the conclusion that when implementing such a diaphragm into a laser annealing apparatus for crystallization of amorphous silicon as described e.g. in US 5,721,416 the destruction of said diaphragm primarily starts locally and not at the same time over the whole area of said diaphragm exposed to said laser beam. At the same time it has been found that the crystal growth on said panel illuminated by said illumination line is always disturbed along the same lines following the moving of said illumination line over said panel. The local failure of the diaphragm as well as the locally poor crystal quality are found to be correlated. In particular, it has been found that a part of said laser beam has been blocked by said diaphragm undesirably. This finding led to the conclusion that the linearity of such razor-blade-like objects may not be sufficient in order to fulfil the requirements on a laser annealing apparatus for crystallization of amorphous silicon on a large scale. In particular, the sharpness of the edge of the razor-blade-like object is not sufficient in order to produce homogeneous polycrystalline silicon films from amorphous silicon layers.

According to the present invention an optical device for generating a sharp illuminating line on a panel is provided, said illuminating line being generated from a laser beam emitted by a high power laser and having a cross-section with long and short axes, said optical device comprising a beam separating optical element for limiting an illuminating field of an incident optical beam, said beam separating optical element comprising a first surface and a second surface, said first surface and said second surface enclosing an angle and forming an edge, said edge spatially separating said incident optical beam into at least two sub-beams, said edge having an edge sharpness and a deviation from its ideal shape of at most 20 microns per meter, said edge being illuminated by said laser beam and spatially limiting said laser beam in at least one direction of said short axis.

Further advantages or features will become apparent from the following description and accompanying drawings in which preferred embodiments of the invention are shown.

### GRIEF DESCRIPTION OF THE DRAWINGS

Preferred exemplary embodiments will be described hereafter with reference to the accompanying drawings, in which:

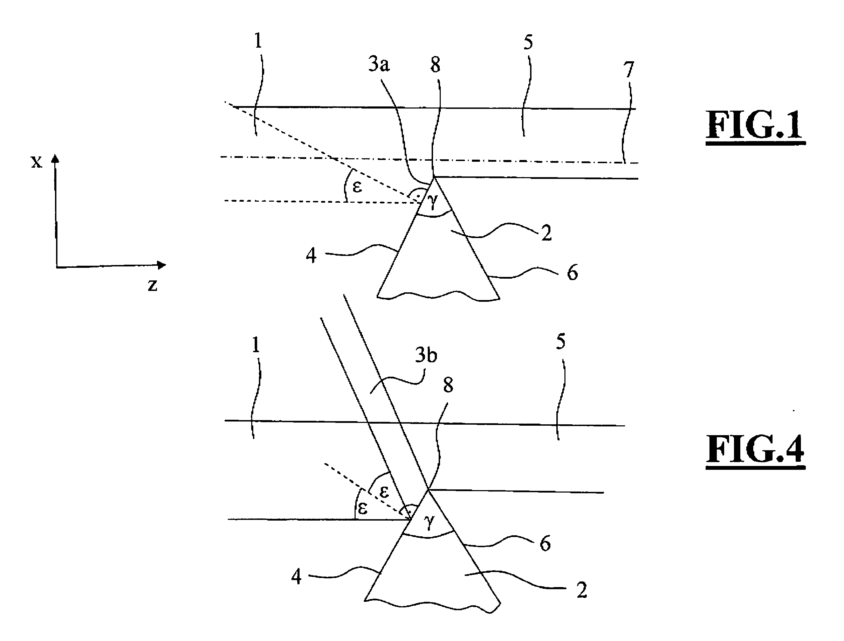

- Fig. 1:: shows a cross section in the x-z-plane of a Cartesian coordinate system of a first embodiment of an optical device for generating a sharp illuminating line on a panel and comprising a beam separating optical element of the absorptive type for limiting an illuminating field of an incident optical beam according to the present invention to illustrate the principle of the present invention;

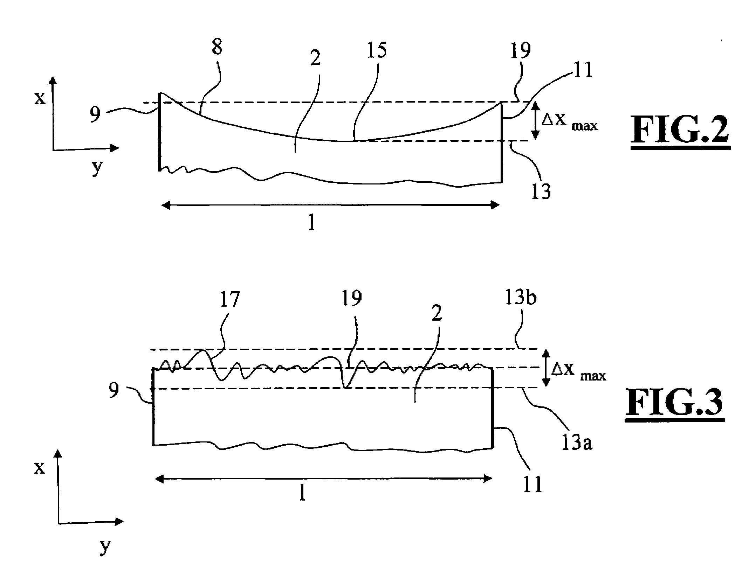

- Fig. 2:: shows a cross section in the x-y-plane of a beam separating element according to Fig. 1, wherein the edge of the beam separating element has a significant curvature in y- direction;
- Fig 3:: shows a cross section in the x-y-plane of a beam separating element according to Fig. 1, wherein the edge of the beam separating element has a significant residual error in y-direction (resulting e.g. after subtraction of a power y error);
- Fig. 4:: shows a schematic drawing of a second embodiment of an optical device for generating a sharp illuminating line on a panel and comprising a beam separating optical element of the reflective type for limiting an illuminating field of an incident optical beam according to the present invention to illustrate the principle of the present invention;

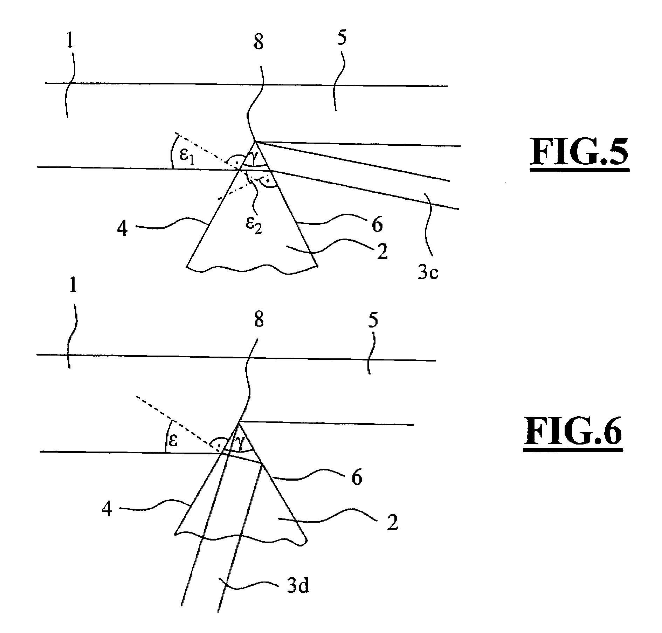

- Fig. 5:: shows a schematic drawing of a third embodiment of an optical device for generating a sharp illuminating line on a panel and comprising a beam separating optical element of the refractive type for limiting an illuminating field of an incident optical beam according to the present invention to illustrate the principle of the present invention;
- Fig. 6:: shows a schematic drawing of a fourth embodiment of an optical device for generating a sharp illuminating line on a panel and comprising another beam separating optical element of the refractive type for limiting an illuminating field of an incident optical beam according to the present invention to illustrate the principle of the present invention;

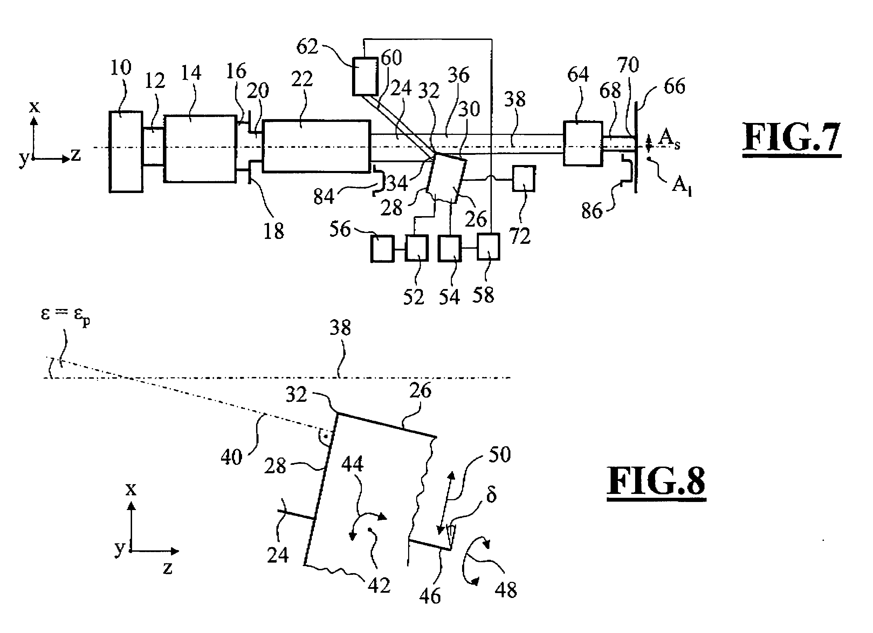

- Fig. 7:: shows diagrammatic presentation of a fifth embodiment of an optical device according to the invention for generating a sharp illuminating line on a substrate and illustrating the beam path for generating the so-called short beam axis;
- Fig. 8:: shows a beam separating optical element of the absorptive being a component of the optical device according to figure 7 in a large scale, and illustrating the orientation of the beam separating optical element of the absorptive type with respect to the incident beam;

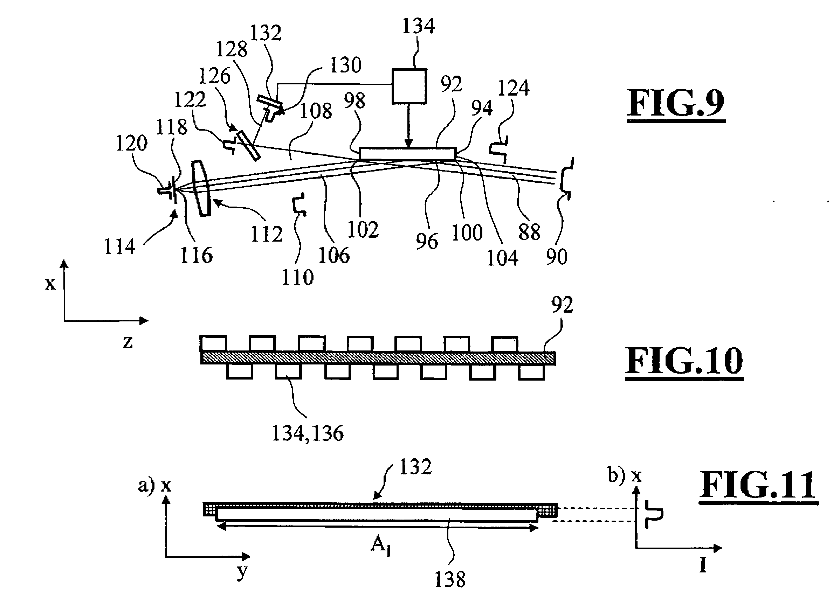

- Fig. 9:: shows a sixth embodiment of an optical device for generating a sharp illuminating line on a panel and comprising a beam separating optical element of the reflective type according to the invention for limiting an illuminating field of an incident optical beam;
- Fig. 10:: shows the beam separating optical element of the reflective type as shown in figure 9 in a cross sectional view in the direction of the long axis and including several actuators being capable of adjusting position and/or deformation of the beam separating optical element of the reflective type;
- Fig. 11:: a) shows an intensity distribution in the x-y-plane as measured by a light detector being part of the optical device according to figure 9; b) shows a cut of the intensity distribution according to Fig. 11a) along A-A

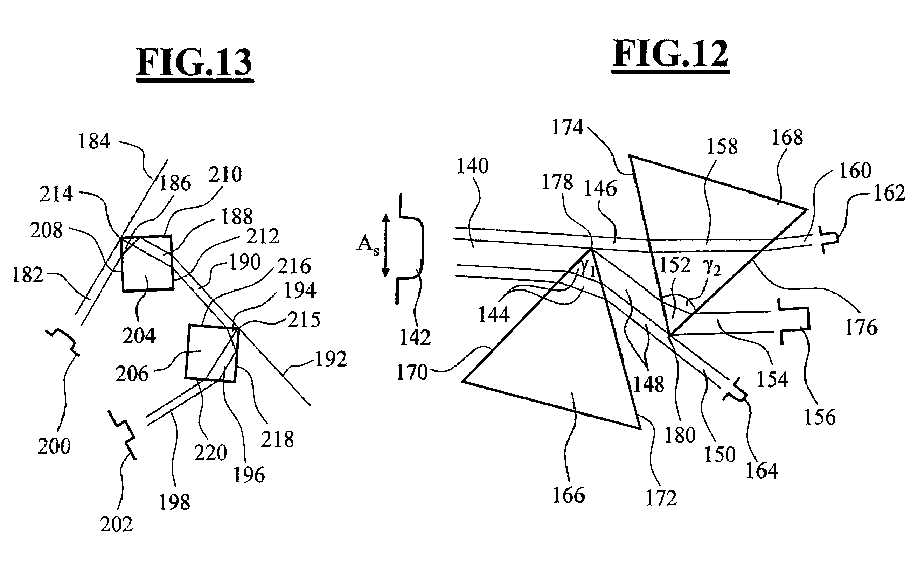

- Fig. 12:: shows a schematic drawing of a seventh embodiment of an optical device for generating a sharp illuminating line on a panel and comprising two beam separating optical element s of the refractive type according to the invention for limiting an illuminating field of an incident optical beam;
- Fig. 13:: shows a schematic drawing of a an eighth embodiment of an optical device according to the invention for generating a sharp illuminating line on a panel comprising two beam separating optical element s of the refractive type according to the invention for limiting an illuminating field of an incident optical beam;

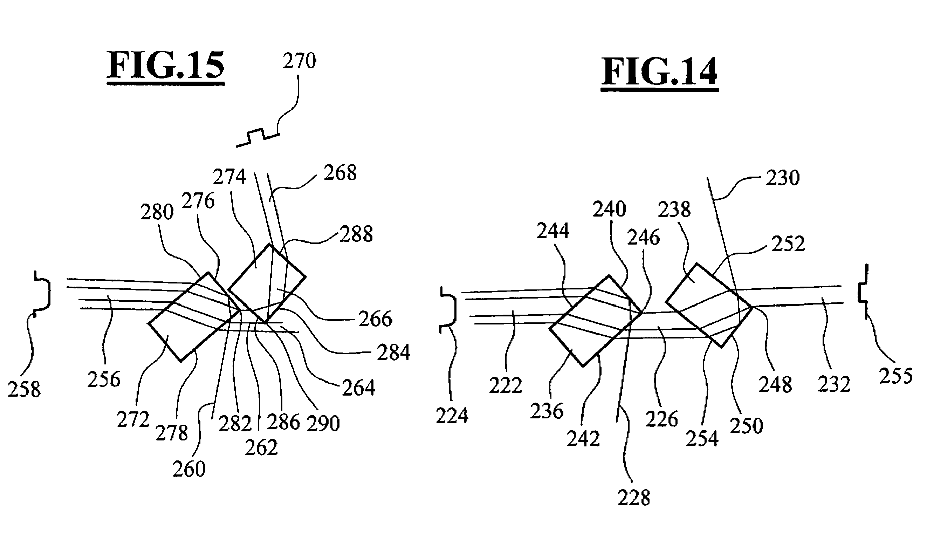

- Fig. 14:: shows a schematic drawing of a ninth embodiment of an optical device according to the invention for generating a sharp illuminating line on a panel and comprising two beam separating optical element s of the refractive type according to the invention for limiting an illuminating field of an incident optical beam;
- Fig. 15:: shows a schematic drawing of a tenth embodiment of an optical device according to the invention for generating a sharp illuminating line on a panel and comprising two beam separating optical element s of the refractive type according to the invention for limiting an illuminating field of an incident optical beam;

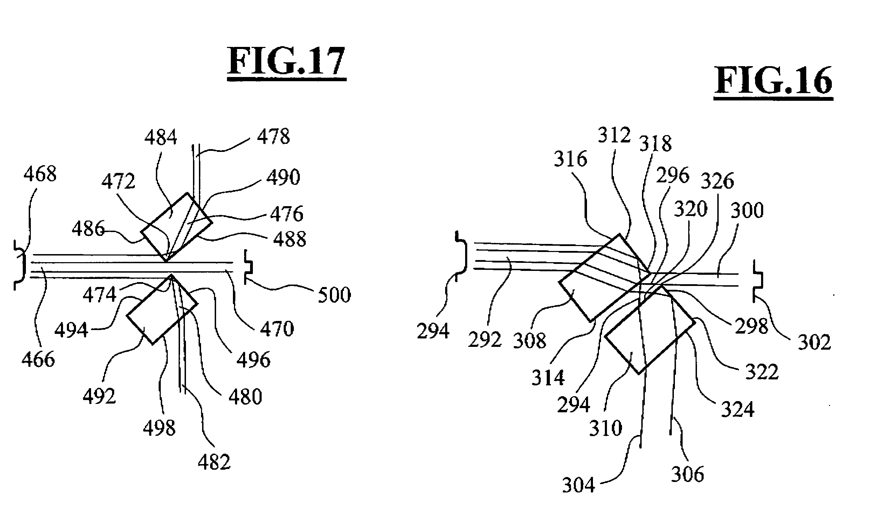

- Fig. 16:: shows a schematic drawing of a eleventh embodiment of an optical device according to the invention for generating a sharp illuminating line on a panel and comprising two beam separating optical element s of the refractive type according to the invention for limiting for an illuminating field of an incident optical beam;
- Fig. 17:: shows a schematic drawing of a twelfth embodiment of an optical device according to the invention for generating a sharp illuminating line on a panel and comprising two beam separating optical element s of the refractive type according to the invention for limiting an illuminating field of an incident optical beam;

### DETAILED DESCRIPTION OF PREFERRED EMBODIMENTS

Figure 1 shows an optical device for generating a sharp illuminating line on a panel and which may be part of a laser annealing apparatus for crystallization of an amorphous silicon layer on said panel.

The optical device comprises a beam separating optical element 2. This beam separating optical element 2 according to figure 1 is capable of absorbing essentially all the energy of the optical beam impinging on a surface 4 of said beam separating optical element 2 and not being reflected by said surface 4. This beam separating element 2 in the following is called beam separating element 2 of the absorptive type.

In the present case shown in figure 1, the beam separating optical element 2 of the absorptive type looks like a prism having two surfaces, a first surface 4 and a second surface 6, wherein said first surface 4 and said second surface 6 enclose a dihedral angle γ and form an edge 8. In the present case the first and second surfaces 4, 6 are arranged perpendicular to the drawing sheet which shows the x-z-plane of a Cartesian coordinate system. For simplicity reasons the first and second surfaces 4, 6 are planar, nevertheless one or both of that first and second surfaces 4, 6 may also be bent or curved.

In the present case the beam separating optical element 2 is drawn as a prism. Nevertheless, the beam separating optical element 2 could also be a bar or a rod or a plate or another object having every shape one may think of. In particular, the two surfaces 4, 6 may form an edge 8 which is not straight or linear (as shall be in the present case) but e.g. may form a circle, an ellipse or any shape desired or predetermined. Furthermore, there may be another prism (or rod or bar or plate or etc.) having the same or a similar shape and having another edge being arranged in parallel or being angularly arranged to the edge of the prism (or rod or bar or plate or etc.) forming a slit or a slit-like opening.

Assuming for illustration reasons that an input beam 1 propagating from the left hand side of the drawing sheet to the right hand of the drawing sheet (z-direction). Input beam 1 in the present case means not only a beam cluster (e.g. a collimated ray) but also any rays not forming a well defined area when illuminating a panel. Nevertheless, the beam separating optical element 2 shall be able to confine or limit the input beam 1 spatially.

The input beam 1 grazes the first surface 4. The edge 8 having a marginal sharpness separates the beam 1 into two sub-beams 3a and 5. The first sub-beam 3a is absorbed by the beam separating optical element 2. The second sub-beam 5 propagates not changing its propagation direction (z-direction) mainly undisturbed along the principle axis 7. Said edge 8 thus spatially separates said incident optical beam 1 into two sub-beams 3a and 5.

Dependent on the linearity of the shape of said edge 8 the intensity profile of both sub-beams 3a, 5 will have a more or less linear edge along the γ-direction. Deviations from said linearity (or said circle, or ellipse or any shape desired or predetermined) of the shape of said edge 8 may consist in a curvature 15 along the long axis of said field limiting device 2 as may be seen from Fig. 2. Fig.'2 shows a field limiting device 2 according to Fig. 1 where the shape 15 of the edge 8 deviates over its length 1 from a predetermined linearity 19 from one end 9 to the other end 11. The maximum variation or deviation Δxₘₐₓ from said predetermined shape 19 is indicated with a line 13 in parallel to the line 19 in Fig. 2.

Deviations from said linearity (or said circle, or ellipse or any shape desired or predetermined) of the shape of said edge 8 may also (in most cases additionally) consist in a residual irregularity error on a short length-scale along the long axis of said field limiting device 2 as may be seen from Fig. 3. Fig. 3 shows a field limiting device 2 according to Fig. 1 where the shape 17 of the edge 8 varies over its length 1 from a predetermined linearity 19 from one end 9 to the other end 11 due to such a residual error. The maximum variation or deviation Δxₘₐₓ from said predetermined shape 19 is indicated by two lines 13a, 13b in parallel to the line 19 in Fig. 3.

According to the invention said edge has a marginal sharpness and a deviation from its ideal shape both with a maximum variance Δxₘₐₓ in linearity of below 20µm per meter length 1 (and preferably below 10µm/m) in the direction perpendicular to the drawings sheet (y-direction). Such a marginal sharpness may be achieved by lapping or polishing of at least one of said first and second surfaces 4, 6. Such a marginal sharpness is sufficient for constructing a laser annealing apparatus for crystallization of an amorphous silicon layer delivering high quality polycrystalline silicon thin films. In particular, such a field limiting device may be adjusted only to block the undesired inhomogeneous part of the illumination line and not (at least) locally, as the case may be when using razor-blades according to the prior art, significant parts of the homogeneous illumination line.

While the angle γ of adjacent surfaces of razor blades forming the edge which is necessary in order to separate an incoming optical beam into two sub-beams will be below 10°, in the present case a dihedral angle γ of more than 40° is preferred, since a less acute angle γ helps creating an edge having an improved marginal sharpness, of e.g. less than 20 µm/m or most preferably less than 5 µm/m, as desired. Due to production needs when polishing or lapping said surfaces in order to form said edge the dihedral angle γ preferably is chosen to be 90° or less. Nevertheless, dihedral angles γ of at least up to 135° may be fabricated using such fabrication processes.

In order to improve the absorbing characteristics of said beam separating optical element 2 the incident angle ε, i.e. the angle ε between the normal vector of the first (incident) surface 4 and the propagation direction z of the incident beam 1 (i.e. the principle axis 7), is adjusted to Brewster's angle ε_{P} or an angle ε not significantly deviating from that angle ε_{P}.

The beam separating optical element 2 preferably is made of a material having a high thermal conductivity λ (preferably more than 100 W/mK or most preferably more than 300W/mK) and a low thermal expansion coefficient a (preferably less than 10⁻⁶ K⁻¹). According to the invention silicon carbide ceramic is preferred to be used. Such a ceramic has a thermal conductivity λ of 150-340 W/mK at a thermal expansion coefficient a of about 2-4 x 10⁻⁶ per Kelvin. Instead of Silicon Carbide (SiC) also Silicon Nitride (Si₃N₄), Aluminium Nitride (Al₂O₃) or Zirconium Bromide (ZrBr₂) may be used. In particular, when combining such a beam separating optical element 2 with convective cooling, such as e.g. a water cooling, the formation of striae due to heating of the beam separating optical element 2 by the blocked first sub-beam 3a may be avoided effectively.

Figure 4 shows a further embodiment of an optical device according to the invention. In this case a beam separating optical element 2 of the absorptive type according to figure 1 is replaced by a beam separating optical element 2 of the reflective type. Similar to the example shown in figure 1 (but not restricting the scope of the invention) the beam separating optical element 2 comprises a first surface 4 and a second surface 6. Both surfaces 4, 6 are planar surfaces. Both surfaces 4, 6 are inclined with respect to each other and form an edge angle γ, which is, for example, 30 degrees. The intersection line of the first surface 4 and the second surface 6 forms an edge 8. This edge 8 is a straight line being arranged perpendicular to the drawing sheet (y-direction).

In the present case the beam separating optical element 2 consists of Sapphire due to its good thermal conductivity λ. Nevertheless, also Silicon or Quartz may be used.

The two surfaces, the first surface 4 and the second surface 6, are made by lapping. Lapping is an abrasive technique using loose grains and enabling the forming of very flat and glazed surfaces (instead of lapping also polishing may be used which is also an abrasive technique using loose grains). These smooth surfaces are the prerequisites for the formation of an edge 8 with a marginal sharpness with a maximum variance in sharpness below 20 microns per meter length.

Assuming an input beam 1 (as defined above) propagating from the left hand side of the drawing sheet to the right hand side (z-direction). The edge 8 specially separates said incident optical beam 1 into two sub-beams 3b and 5. The first sub-beam 3b is reflected at the mirrored first surface 4 of the beam separating optical element 2. The second sub-beam 5 propagates unchanged in the propagation direction z of the input beam 1.

Figure 5 shows a third embodiment of an optical device for generating a sharp illuminating line on a panel. Similar to the first two optical devices described above, a beam separating optical element 2 for limiting an illuminating field of an incident optical beam 1 is present. The beam separating optical element 2 in this embodiment is of the refracting type. The beam separating optical element 2 is formed by a prism of usual kind.

The prism 2 comprises a first entrance surface 4 and a second exit surface 6. Entrance surface 4 and exit surface 6 might also have any predetermined shape. In particular the surfaces 4, 6 might be bent or curved as well as partially or fully planar.

The entrance surface 4 and the exit surface 6 are inclined with respect to each other. They form a dihedral angle γ, for example a wedge angle γ of about 55 degrees.

Since entrance face 4 and exit face 6 are planar surfaces the intercepting line is linear. If for example both surfaces 4, 6 both form a cone intercepting line would have a circular or elliptical shape. The intercepting line, being in the present case a linear line, constitutes an edge 8. Said edge 8 similar to the examples scribed above is able to spatially separate an incident optical beam 1 (from the left side of the drawing sheet) into two sub-beams 3c, 5.

The (lower) part of the input beam 1 which penetrates the first surface 4 of the prism 2 is refracted at the entrance surface 4 as well as at the exit surface 6 of the prism 2. This results from the fact that the angles of incidence ε₁, ε_{2,}, of the incoming beam 1 are not equal to zero at the first surface 4 as well as at the second surface 6. Nevertheless having an angle of incidence ε₁, ε₂ equalizing zero at the first surface 4 or at the second surface 6, respectively, would also be possible without limiting the scope of the present invention.

In the present case, the refracting beam separating optical element 2, with the shape of the prism, is made of Sapphire. Sapphire is characterized by its high thermal conductivity X. Nevertheless, the prism 2 may also be made of material comprising calcium fluoride, magnesium fluoride, barium fluoride, quartz or optical glass.

A corresponding absorptive beam separating element could be made of ceramics or crystalline material like zinc selenide or silicon single crystal.

Figure 6 shows an optical device quite similar to the embodiments shown in figures 1-3. The optical device according to figure 6 includes a beam separating optical element of the refractive and reflective type. The beam separating optical element 2 includes a first surface 4 forming an entrance face and a second surface 6 forming a reflection face. Both, first surface 4 and second surface 6, are planar surfaces. First surface 4 and second surface 6 are inclined with respect to each other and form a dihedral angle γ, which is, for example, 64 degrees. First surface 4 and second surface 6 are forming an edge 8 running linearly. Said edge spatially separates an incident optical beam 1 into two sub-beams 3d, 5, one of which, namely sub-beam 5, propagates in the direction of the incline beam 1 in the z-direction, the other, namely sub-beam 3d, is refracted at entrance face 4 and reflected at the rear surface 6.

The angle of incidence, ε, of the incoming beam 1 at the surface 4 is preferably chosen to be the Brewster's angle εₚ in order to reduce reflection at the front surface 4 as far as possible. The reflected sub-beam 3d is conducted to a beam-dump. Therefore, the thermal load caused by the incoming beam 1 to the beam separating optical element 2 is reduced.

The beam separating optical element is **characterized in that**, said edge 8 has a marginal or edge sharpness of at most twenty microns (here to be measured in x-direction) per meter length (here to be measured in y-direction). Such an edge sharpness is again achieved by a lapping or polishing process of at least one of said surfaces 4, 6.

The beam separating optical element 2 is made of Sapphire due to its high thermal conductivity λ of about 40 W/(m K): This material helps to avoid destructions of the beam separating optical element 2 due to the high energy intensity during total reflectance. Instead of Sapphire also materials such as calcium fluoride, magnesium fluoride, barium fluoride, quartz, zinc selenide, silicon single crystal or optical glass may be used.

Figure 7 shows a schematic drawing of a fifth embodiment of an optical device according to the invention for producing a thin illuminating line with high aspect ratio (length divided by width of the line). Figure 7 illustrates the beam path for generating the so-called short beam axis of the illuminating line.

The optical arrangement illustrated in figure 7 comprises an excimer laser 10 which emits a laser beam 12 in per se known manner. Instead of an excimer laser emitting light, also a CO₂-Laser, a He-Ne laser, or a solid state laser may be used. The power of the laser may be of more than 50W. The dimensions of the excimer laser beam 12 emitted, for instance, may be 15 x 40 cm². This laser beam 12 now is to be processed by means of the optics which will be specified below to yield an illuminating line 70 as shown at the right hand side of figure 7.

The beam 12 emitted be the excimer laser 10 first enters a beam conditioning and input aperture adapting device 14. This beam conditioning and input aperture adapting device 14 may include an attenuator, if desired, and e.g. an lens telescope, which adjusts the dimensions of the entrance aperture 18 of the optics next down the line.

The adapted beam 16 leaving the beam conditioning and input aperture adapting device 14 enters the optical input aperture 18. The beam 20, which passes the input aperture 18 is conducted to an imaging and homogenizing optical device 22 which may correspond to that described in US 5,721,416. This imaging and homogenizing optical device 22 delivers an imaged and homogenized beam 24 having a long and a short axis with a width of around 0,005 to 1 mm (short axis A, extension) and a length of e.g. 10 to 100 cm (long axis A₁ extension). The short axis A, extension is shown at the right hand side of Fig. 7 (x-direction), while the long axis A₁ extension runs perpendicular to the drawing plane (y-direction).

The edges of the imaged and homogenized beam 24 in the direction of the short axis As are not very steep as may be seen by the beam profile 84 shown in figure 7. Because of processing related needs the edges or at least one of said edges in direction of the short axis A, have to be sharp. In particular, a sharpness of around 1µm is necessary in order to produce high quality polycrystalline silicon thin films when illuminating an amorphous silicon film with the laser beam generated by the present optical device.

In the present case a beam separating optical element 26 of the absorptive type is introduced into the propagation direction z of the imaged and homogenized beam 24. This beam separating optical element 26 of the absorptive type is used for the purpose to block a flat edge of the imaged and homogenized beam 24 in one short axis direction Aₛ.

The beam separating optical element of the absorptive type 26 consists of a thin plate of a silicon carbide ceramic. Two surfaces 28, 30 enclosing a dihedral angle γ and forming an edge 32 are necessary in order to fulfil the requirements serving to enable the optical device to produce the line beam 70 with sufficient sharpness.

The edge 32 separates the imaged and homogenized beam 24 in the present case into two sub-beams 34, 36. Sub-beam 34, which is directed to the first surface 28 of the beam separating optical element 26 blocks the undesired part of the imaged and homogenized beam 24. The main part of this sub-beam 34 is absorbed by the beam separating optical element 26. The sub-beam 36, which is spatially limited by the absorbing edge 32 propagates along the principle axis 38 in z-direction and enters an optical reducing device 64. This optical reducing device 64 images the absorbing edge 32 on a panel, which might be substrate 66 carrying above mentioned amorphous silicon layer.

Said reducing optics 64 may help to generate a sharp edge definition (sharpness) of the illuminating line 70 resulting in a beam intensity profile as characterized by reference numeral 86. It has to be mentioned that the sharpness of the illuminating line 70 is significantly influenced by the shape of the edge 32 perpendicular to the propagation direction of the beam 24, which is in the present case the x-dircction.

Taking this into consideration, the invention uses a beam separating optical element 26 having an absorption edge 32 with an edge sharpness (marginal sharpness) of below 20 microns/meter. This means that the variation of the predetermined linearity (or, generally, the deviation from its ideal shape) in x-direction is not more than 20 µm over a length of 1 m in y-axis direction. Such a sharpness preferably is achieved by lapping or polishing the first surface 28 and/or the second surface 30 defining the absorbing edge 32. Such an absorbing edge 32 may be imaged by an reducing optics 64 at a ratio of for example 10:1 to perform edge definitions of the illuminating line 70 caused by the reduced beam 68 down to below 1 µm.

One may keep in mind that not only beam separating element s 26 with a linearly running absorption edge 32 may be produced in order to deliver such definitions of the illuminating line 70 but also other predetermined lines such as circular or elliptical depending on the requirements defined by the object to be illuminated.

The beam separating optical element 26 of the absorptive type as shown in Fig. 1 is nearly maintenance free, does not need any additional beam dump in order to accumulate the high laser energy being blocked by the beam separating optical element 26 as far as the cooling of the beam separating optical element 26 takes place in sufficient manner.

In the present case the absorbing characteristics of the beam separating optical element 26 may be optimized. The first surface 28 may be covered by an anti-reflection coating or by adjusting the first surface 28 with respect to the incoming beam 24 in such a way that reflection is minimized. In the present case the beam separating optical element 26 is not covered by an anti-reflection coating since such a coating may either disturb the optimized sharpness of the absorbing edge 32 or may suffer damage by the high energy radiation. Presently, the normal vector of the plane formed by the first surface 28 and the principle axis 38 of the.incoming imaged and homogenized beam 24 form an angle of incidence ε close to Brewster's angle ε_{P}. The absorbing characteristics is improved, residual reflectance is minimized.

Preferably, the angle of incidence ε has to be adjusted to Brewster's angle ε_{P} as close as possible. Deviances from Brewster's angle ε_{P} not exceeding five degrees or most preferably not exceeding two degrees are necessary. In order to realize such an orientation of the beam separating optical element 26 with respect to the propagation direction z of the homogenized beam 24 an incline angle adjusting device 52 is introduced. A person may adjust the angle of incidence ε to a predetermined value, i.e. Brewster's angle ε_{P}. The adjustment may be accomplished manually or driven by a motor or any other actuator such as piezoelectric crystals. Fig. 8 shows exemplary the adjusting of the angle of incidence ε by rotating the beam separating optical element 26 around the rotation axis 42 in the rotation direction 44. The incline angle adjustment device 52 in the present case is driven by an open loop or a closed loop control device 56.

In some cases it is necessary also to adjust the position of the beam separating optical element 26 with respect to the plane perpendicular to the propagation direction z of the homogenized beam 24. In particular, the absorbing edge 32 may not correspond to the long axis direction A₁ as desired. Another problem may be that one end of the beam 24 may not be blocked by the beam separating element 26 as desired. Therefore, preferably a position adjustment device 54 is necessary in order to adjust the position of the beam separating optical element 26 with respect to the incoming homogenized beam 24.

Such a position adjustment device 54 may allow adjustment of the position of the beam separating optical element 26 as indicated by the arrows 48, 50 shown in figure 8. A linear shift of the beam separating element in the x-z-plane in parallel to the direction of the first surface 28 and a rotation around an axis perpendicular to the first surface 28 as indicated by the arrow direction 48 may be possible. Instead of such a solution one may also think of moving the beam separating optical element 26 in the x-direction or the z- direction respectively.

The optical device according to Fig. 7 additionally includes an intensity monitoring device 62 for monitoring the intensity of the incident optical beam near the absorbing edge 32 of the beam separating optical element 26. In the present case, the intensity monitoring device 62 consists of a light detector 62 which detects the intensity of the residual reflected beam 60 coming from the first surface 28 of the beam separating optical element 26. In particular, the intensity distribution of this residual reflected third sub-beam 60 is measured along the long axis A₁. A controlling device 58 controls the adjustment of the position in dependence of the intensity monitored by the detector 62. Preferably, residual reflection 60 is measured at both long side edges of the beam separating optical element 26. The sum of both signals may serve to control the total depth of the beam separating optical element 26 striking the incoming beam 24 whereas the difference between the intensity measured at both ends of the beam separating element 26 may serve to adjust the deviation of the orientation of the absorbing edge 32 with respect to the long axis direction A₁.

Figure 9 shows a sixth embodiment of an optical device according to the invention. A homogenized beam 88, which e.g. may be emitted from an imaging and homogenizing optical device 22 as shown in figure 7, is directed to a reflecting mirror 92. The beam 88 is homogenised along the short axis Aₛ. Only the edges of the beam 88 are non-uniform as may be seen from the beam profile 90 representing the beam shape along the short axis Aₛ. The reflecting mirror 92 consists of ULE™. Instead of ULE^{™}, any other material suitable for mirrors such as ZERODUR^{™}, fused silica, calcium fluoride, or optical glass may be used.

The task of the reflecting mirror 92 is the separation of the uniform and the non-uniform parts of the profile 90. This can be achieved by overfilling the mirror 92 in a way that only the uniform part is reflected and the non-uniform part does not hit the useful area, indicated with the reference sign 96, of the mirror. The reflecting mirror 92 has the shape of a planar plate having three characteristic surfaces, in the following designated as first surface 94, second surface 96 and another first surface 98. The second surface 96 forms the useful area of the mirror 92 both other surfaces, namely the first surface 94 and the another first surface 98 are perpendicularly inclined with respect to the second surface 96. First surface 94 and second surface 96 form an edge 100. Similarly, second surface 96 and the another first surface 98 form an edge 102. Both edges 100, 102 have an edge sharpness of below 20 µm/m. This sharpness is achieved by lapping the surfaces 94, 96, 98.

Both edges especially separate the incident optical beam 88 into two sub-beams 104, 106 and 106, 108, respectively. The first sub-beam 104 may be reflected, absorbed, or transmitted at the first surface 94. The second sub-beam 106 is reflected at the second surface 96. The another first sub-beam 108 passes the mirror 92 having the same propagation direct direction as compared with the incoming beam 88.

As described above, only the uniform part, namely the second sub-beam 106 is reflected (as may be seen by the beam profile 110 in the propagation direction), while the non-uniform parts of the profile 90 are separated (sub-beams 104, 108, beam profiles 122, 124).

The preferred incidence angle ε of the incoming beam 88 on the mirror 92 is very flat, e.g. 75° or more. The advantage of this is an increase of the physical area of the mirror 92 in direction to the short axis Aₛ. By that the thermal load to the layer can be reduced considerably. For example an incidence angle ε of 84 degrees related to the normal vector of the second surface 96 of the mirror 92 leads to a ratio 1:10 between the dimensions of the beam 88 along the short axis A, and the width of the mirror 92. A beam 88 width of i.e. 150 µm in direction to the short axis A, can be reflected by a mirror 92 with 1.5 mm width.

For the mirror 92, a glass plate (not shown) with a thickness of 1.5 mm can be used. The plate is used in such a way that the active mirror, namely the surface indicated with reference numeral 96, is the bottom side of the glass plate. An alternative solution to the mirror 92 could be also a reflection prism where the beam enters the prism through a first face, is reflected by total internal reflection inside the prism on a second face and exits the prism again through a third face..

To get a constant width of the beam 106 along the long axis A₁ the thickness of the plate has to be constant and the edge must be very sharp. But because of the flat incidence of the requirements the width of the active mirror area is reduced by a factor of approximately 10. The reflected beam 106 is imaged by a reducing optics 112 onto the plane of a panel 114 (the reduced beam is indicated by reference number 116 and corresponding beam profile along short axis direction by reference number 120). The reducing optics may either include one or more refractive lenses 112 as shown in figure 9, one or more reflective mirrors or may comprise a combination thereof. Because there is only a reduction in one dimension required the reducing optics should be preferably cylindrical.

By turning the mirror 92 the fraction of the reflected beam 106 can be varied. This gives the possibility to adjust the width of the line beam 106. This leads to a power loss which is proportional to the reduction factor of the width.

A further extension of the described solution is the use of an active stabilization apparatus for stabilizing or better may be for preventing a deformation of the active mirror 92, in particular that glass plate described above, along the long axis A₁. As shown in Figure 9 a part of the non-uniform beam, namely the another first sub-beam 108, which doesn't hit the mirror 92 hits a glass plate 126. Because of the high power of the beam 108 the glass plate 126 is oriented close to the Brewster angle εₚ in a way that only a small percentage of the energy is reflected to a light sensitive detector 132. In a preferred solution the light sensitive detector 132 is a charged coupled device array which covers the full length of the long axis A₁ and monitors the intensity distribution of the non-uniform part of the beam 108.

According to the sharp edge 102 of the mirror 92 there should be also a steep intensity ramp at one side of the beam profile 130 (reflection of the beam 108 with the beam profile 122). This intensity ramp also shown in figure 11b) along the short axis Aₛ and in figure 11a) along the long axis A₁ can be monitored with the detector 132. In an ideal case this ramp 130, 138 is a straight line along the axis A₁ as shown in figure 11a). If there are some deformations of the mirror 92 this will be seen on the detector 132. With this information the shape of the mirror 92 can be adjusted under the control of a deformation adjusting device 134. This deformation adjusting device 134 may include some mechanical elements like actuators 136 as shown in figure 10. The mechanical actuators 136 (e.g. piezoelectric crystals) are positioned at both sides of the reflection mirror 92 (or for example the glass plate delivering the reflective back side surface as described above) and displaced with respect to each other along the long axis direction.

It is evident that the combination of the light sensitive detector 132 and the adjusting device 134 may not only be used for adjusting or equalizing deformations but also for adjusting the position of the hole mirror 92 with respect to the incoming beam 88.

Figure 12 shows a seventh embodiment of an optical device being capable of generating a sharp illuminating line on a panel. The solution according to figure 12 comprises two beam separating optical element s 166, 168. Both beam separating element s 166, 168 are prisms of identical shape. It would be also possible to use prisms with different shapes.

Both prisms 166, 168 are arranged in series with respect to the propagation direction of an incoming beam 140. Both prisms comprise first and second surfaces 170, 172, 174, 176. The first surfaces 170, 174 in the propagation direction of the input beam 140 of both prisms 166, 168 form entrance faces, the second surfaces 172, 176 of the prisms, 166, 168 form exit faces. The first entrance face 170 and the second exit face 172 of the first prism 166 are inclined with respect to each other and form a wedge angle γ₁, which is, for example 60 degrees. The entrance face 174 and the exit face 176 of the prism 168 are also inclined with respect to each other and form a wedge angle γ₂ which, in the present case, is identical with the wedge angle γ₁. The wedge angles γ₁ and γ₂ are shown in figure 12.

Starting again from said incoming homogenized beam 140 having a long axis A₁ and a short axis A, and a high aspect ratio. The beam profile along the short axis A, is shown in figure 12 and indicated with the reference sign 142. The beam shape 142 along the short axis A, consists of a uniform part in the centre of the short axis Aₛ with, in the present case, mainly constant intensity and non-uniform parts on both sides of the uniform part of the beam 140.

The task of the present invention consists in generating sharp intensity ramps on both sides of the uniform part of the homogenized beam 140. This is achieved by spatially separating the non-uniform parts of the beam 140 using of the two prisms 166, 168.

The beam 140 propagating from the left side of the drawing to the right side hits the first surface 170 of the first prism 166 partially. The input beam 140 is spatially separated into two sub-beams 144, 146. The first sub-beam 144 is refracted at the first surface 170 of the first prism 166. The second sub-beam 146 does not hit the first surface 170 of the first prism 166. This second sub-beam 146 therefore propagates along the principle direction of the incoming beam 140.

The sharper the edge 178 the sharper is the slope of the intensity ramp at the respective side of the separated parts of the incoming beam 140, namely the first refracted sub-beam 144 as well as the second not disturbed sub-beam 146. Therefore, that edge 178 spatially separating said incident optical beam according to the invention has a marginal or edge sharpness of better than 20 µm/m. This could be achieved by lapping and/or polishing that first and second surfaces 170, 172 in particular in the region forming the edge 178.

When propagating to the right hand side of the drawing sheet the second sub-beam hits the first surface 174 of the second prism 168. At this surface 174 the second sub-beam 146 is refracted forming the refracted sub-beam 158. At the second surface 176 of the second prism 168 the refracted sub-beam is again refracted forming the two times refracted second sub-beam 160. This sub-beam 160 has a beam profile along the short axis which is schematically illustrated in figure 12 and indicated by the reference number 162.

The first sub-beam 144 that hits the first surface 170 of the first prism 166 is refracted at the first surface 171. In order to reduce residual reflection at the first surface 170 of the first prism 166 the angle of incidence e preferably is chosen to equal Brewster's angle εₚ. The refracted first sub-beam 144 propagates through the prism 166 being absorbed as less as possible. When the first sub-beam 144 hits the second surface 172 the beam is again refracted forming the beam 148. The upper part of the two times refracted first sub-beam 148 in the drawing according to figure 12 hits the first surface 174 of the prism 168. The edge 180 formed by the two surfaces 174, 176, spatially separates the incident optical and two times refracted sub-beam 148 into further two sub-beams 150, 152. The first part of the first sub-beam 150 propagates along the principle axis of the sub-beam 148 without being disturbed by any object. The second part 152 of the first sub-beam 148 is refracted at the first surface 174 of the second prism 168.

The sharper the edge 180 the steeper are the intensity ramps at the separated parts 150, 152 of the first sub-beam 148. In order to fulfil the requirements being described below, the edge 180 formed by the inclined first and second surfaces 174 and 176 of the second prism 168 has an edge sharpness of 20 µm/m or less.

The second part of the first sub-beam is refracted at the first surface 174 of the prism 168 forming the beam 152. The angle of incidence ε of the beam 148 hitting the first surface 174 preferably equals to Brewster's angle εₚ in order to reduce residual refraction as far as possible.

The refracted part 152 of the beam hits the second surface 176 of the prism 168, is thereon refracted and forms the two times refracted beam 154 having an intensity distribution along the short axis close to that shown in figure 12 and characterised by the reference number 156. In the ideal case the intensity ramps at both sides of the beam profile along the short axis A, are diffraction limited and therefore strongly dependent on the sharpness of the edges 178, 180 of the two prisms 166, 168.

Similar to the preceding examples shown in figures 7 and 9, respectively, adjusting devices for adjusting the angle of incidence ε, the tilt angle δ and/or the position x, y, z of one ore both of the prisms 166, 168 with respect to the incoming beam 140 and with respect to each other may be incorporated. Furthermore, also a monitoring system similar to that shown in figure 7 and 9 in order to enable person to control the adjusting of the prisms 166, 168 with respect to the beam 140 and/or to each other may be included.

The useful beam 154 and the non-useful beams 150, 160 are deflected in different directions. The non-useful beams 160, 150 may preferably be conducted to a beam dump and only the useful beam 154 may be imaged for example by a reducing optics to a panel, e.g. for a crystallization of amorphous silicon on a substrate.

Figure 13 shows an eighth embodiment of a optical device for generating a sharp illuminating line on a panel. Again, the illuminating line is generated from a laser beam 182 by a high power laser such as an excimer laser with a wavelength of for example 193 nm. The illuminating line 182 has a beam shape along the short axis Aₛ as described above and shown in figure 13 characterized by the reference number 200. The homogenized beam 182 is directed to a first beam separating element 204, which is, in the present case, a rod. The rod resembles a cuboid. The cuboid 204 comprises four surfaces, which are in the present case arranged perpendicular to the drawings sheet (y-axis direction in a Cartesian coordinate system).

When the homogenized beam 182 hits the rod 204 the edge 214 formed by adjacent surfaces 208, 210 subdivides the beam 182 into sub-beams indicated with the reference numbers 184 und 186. The second sub-beam 184 is not used and directed to a beam dump. The first sub-beam 186 is diffracted at the first surface 208, reflected at the second surface 210 and directed to the third surface 312 adjacent to the second surface 210. The reflected first sub-beam 188 is refracted at the third surface 212. The reflected and refracted first sub-beam 190 is conducted to a second beam separating element in the form of a rod with similar orientation with respect to the drawings sheet (y-axis direction of relevant surfaces). The sub-beam 190 hits a first surface 216 of the second beam separating element 206. The edge 115 formed by two adjacent surfaces 216, 218 sub divides the incoming first sub-beam 190 into two parts 192, 194. The first part 192 of the reflected and refracted first sub-beam 190 is not used and conducted to a beam dump. The second part 194 of the reflected and refracted first sub-beam is refracted at the first surface 216 of the second rod 206. Hitting the second surface 218 of the second beam separating element 206 the second part 194 is reflected in the direction of the third surface 120 adjacent to the second surface 218. The reflected beam 196 is further refracted at the third surface 220 of the rod 206. This reiteratively reflected second part 198 of the first sub-beam 198 constitutes the useful beam with the predetermined and desired beam profile 202.

Again, dependent on the sharpness of the edges 214, 215 of the rods 204, 206, the out coming sub-beam 198 has a beam profile along the short axis A, being meanly diffraction limited.

The material of the rods preferably is fused silica. No coatings of the surfaces of the rods are used in order to be able to create edges 214, 215 as sharp as possible. The edges preferably are formed by polishing or lapping adjacent surfaces 208, 210 and 216, 218, respectively.

In order to reduce residual reflection at the entrance surfaces 208, 216 of the beams 182, 190, respectively, the angles of incidence ε₁, ε₂ are chosen to equal Brewster's angle ε_{P} as close as possible.

An illumination line with a beam profile along the short axis as indicated by reference numeral 200 may be generated by an imaging and homogenizing optical device as described above. The useful out coming beam 198 may be imaged by a reducing optical device in order to create a line beam with high aspect ratio and sharp edges in direction to the short axis. Such an illumination line may be used for the fabrication of high quality p-Si from a-Si by laser annealing.

Figure 14 shows another solution of an optical device for generating a sharp illuminating line as desired for the fabrication of high quality polycrystalline silicon thin films.

A homogenized laser beam 222 of the known type and profile 224 is directed to a first surface 244 of a rod made of fused silicon and oriented similar to the rods shown in figure 13. The homogenized beam 222 is reflected at a third surface 244 of the rod 236 and conducted to a first and a second surface 240, 242 being arranged adjacent to each other. The refracted beam 244 is spatially separated by an edge 246 formed by said adjacent surfaces 240, 242 into two sub-beams, a first sub-beam 228 and a second sub-beam 226. The first sub-beam 228 is reflected at the first surface 240 of the first beam separating element 236, refracted at the second surface 242 of the first beam separating element 236 and conducted to a beam dump (not shown). The second sub-beam 226 is refracted at the second surface 242 of the first beam separating element 236 and directed to a third surface 254 of a second beam separating element 238. At this surface 254 the second sub-beam 226 is refracted and directed to two surfaces 250, 252 opposite to the third surface 254 of the second beam separating element 238. An edge 248 formed by the two adjacent surfaces 250, 252 spatially separates the incident optical beam 226 into further two sub-beams, namely a first part 230 of the first sub-beam 226 and a second part 232 of the first sub-beam 226. The first part 230 of the first sub-beam 226 is reflected at the first surface 250 and refracted at the second surface 252 of the rod 238. This part 230 is not useful and therefore directed to beam dump (not shown). The second part 232 of the first sub-beam 226 is refracted at the second surface 252 of the second beam separating element 238. This second part 232 of that first sub-beam 226 constitutes the useful beam. This beam 232 may be reduced by a ratio of 4:1 and directed to a panel covered with a layer of amorphous silicon in order to crystallize this material.

In order to reduce residual reflection at the incline surfaces of the rods 236, 238, namely the third surface 244 and the third surface 254 of the rods 236 and 238, the incline angles ε₁, ε₂, namely the angles between the propagation direction of the incoming beams 222, 226 and normal vectors of said surfaces 244, 254, respectively, preferably equal Brewster's angle εₚ.

In the present case the not used beams 228, 230 are directed to beam-dumps. They may also be used for detection purposes such as for monitoring the position of the rods 236, 238 with respect to the incoming beams 222, 226, respectively. Having determined the position of one or both of the rods 236, 250 with respect to the incoming beams 222, 226, respectively, an adjustment of one or both of the rods 236, 250 may be implemented in order to adjust a desired orientation and/or position. According to the invention the edges 146, 248, respectively. The sharpness or steepness of the intensity ramps along the short axis profile 255 depends significantly on the edge sharpness. An edge sharpness of 20µm/m or less may be achieved by lapping or polishing the respective surfaces 240, 242, 250, 252 forming the edges 246, 248, respectively.

Figure 15 shows a tenth embodiment of an optical device according to the invention and again based on two rods 272, 274.

An homogenized beam 256, of the above described type and profile 258 along the short axis is directed to a third surface 280 of a first beam separating element 272, namely the before mentioned rod 272. The complete beam is refracted at said third surface 280 and conducted to the opposite first and second surfaces 276, 278. The edge 282 formed by the adjacent first and second surfaces 276, 278 separates the refracted beam 280 into two sub-beams 260, 262. The first sub-beam 260, i.e. a non useful part of the homogenized beam 256, is reflected at the first surface 276, refracted at the second surface 278 and directed to a beam dump (not shown). The remaining second sub-beam 262 is refracted at the second surface 278 and directed to the second rod 274. An edge 219 formed by two adjacent surfaces 284, 286 enclosing a dihedral angle γ of 90 degrees spatially separates the second sub-beam 262 into further two sub-beams 264 and 266. The first part 264 of the first sub-beam 262, namely a further non useful part of the incoming beam 256, is therefore directed to a beam dump. The second part 266 of the first sub-beam 262 is refracted at the second surface 268 of the second beam separating element 274. The refracted beam is reflected at the first surface 284 of the second beam separating element 274 and, when further propagating, refracted at the third surface 288 of the second beam separating element 274 forming the useful part 268 of the incoming beam 256 and having the desired beam profile 270 along the short axis.

Concerning the materials used for the fabrication of the rods 272, 274, the orientation of the rods 272, 274 with respect to the beams 265, 262 and the possibilities of adjusting, monitoring and imaging separate parts or not separated parts of the beam 256, the reader may take into consideration the examples described above.

Figure 16 knows an eleventh embodiment of an optical device according to the invention. The separation of a useful beam having a beam shape long the short axis as shown before is based on another arrangement comprising two rods 308, 310.

A homogenized beam 292 of known type and shape 294 is directed to a third surface 316 of a first beam separating element 308. The homogenized beam 292 is refracted as a whole at the third surface 316 of the first beam separating element 308. Similar to the example shown in figure 15 the refracted beam 292 is separated into two sub-beams 294 and 296 at the edge 380 formed by the two adjacent surfaces 312, 314. The first sub-beam 294 is reflected at the first surface 312, refracted at the second surface 314, directed to a first surface 320 of the second beam separating element 310, refracted at said first surface 320, directed to a third surface 324 and thereon refracted forming the non-useful beam 304 which may be directed to a beam dump (not shown). The second sub-beam 296 is refracted at the second surface 314 of the first beam separating element 308 and directed to second beam separating element 310. The edge 326 formed by two adjacent surfaces 320, 322 of said second beam separating element 310 separates the beam 296 into two further sub-beams 298, 300. The first part 298 of the second sub-beam 296 is refracted at the first surface 320 of the second beam separating element and subsequently reflected at the second surface 322 of the second beam separating element 310. In the further propagation direction of said first part 298 of said second sub-beam 296 the first part 298 is refracted at the third surface 324 of the second beam separating element 310 forming a further non useful beam 306 which may also be directed to a beam-dump.

The second part 300 of the second sub-beam 296 forms the useful beam having the desired beam profile 302 as shown in figure 16.

Similarly to the examples described above, the embodiment according to a figure 16 may be implemented in a laser annealing apparatus for crystallization of an amorphous silicon layer on a panel. The requests for this capability are the sharp edges 318, 326 having an edge sharpness of better then 20µm/m and being producible in the same manner as described above.

Figure 17 shows a twelfth embodiment of an optical device according to the invention.

Deviating from the optical arrangements according to figures 12-16 the residual part of the incoming light beam is not blocked after having passed one beam separating optical element according to the embodiment shown in figure 17. Not useful parts of the incoming beam are separated from the useful beam independently.

The optical device according to figure 17 bases on two beam separating optical element s in the form of rods 484, 492. An incoming homogenized beam 466 of the known type, namely an illuminating line with a long and a short axis A₁, Aₛ and a beam profile along the short axis Aₛ as indicated in figure 17 by reference numeral 468 hits first surfaces 486, 494 of the rods 484, 492 at both ends along the short axis Aₛ. These non-useful beam parts, in the following named as second sub-beam 472 and third sub-beam 474, are separated from the first sub-beam 470 being the useful part of the incoming homogenized beam 466. Separation is carried out by respective edges 472, 474 formed by dihedral angled first and second surfaces 486, 488 and 494, 496 of the rods 484, 492, respectively. The second and third sub-beam 472, 474 are refracted at the first surfaces 486, 494 of the two rods 484, 492 subsequently reflected at the second surfaces 488, 496 forming the sub-beams 476, 480 and at least refracted at the third surfaces 490, 498 of the rods 484, 492 delivering the beams 478, 482. These sub-beams 478, 482 are directed to beam dumps. The incline angles ε₁, ε₂ of the incoming beam 466 with respect to the first surfaces 486, 494 of the two rods 484, 492 preferably equal the Brewster-angle εₚ in order to reduce residual reflection as far as possible.

The material preferably chosen for the rods is, similar to the examples shown above, fused silica. However, any other transparent material such as, e.g., calcium fluoride or optical glass may be used. The edges 472, 474 which are responsible for delivering the desired steep intensity ramps at both sides of the short axis width of the line beam indicated with reference number 500 are prepared according to the invention in such way that they have an edge sharpness of least one 20 µm/m or better. This may be achieved, following the teaching described above, by lapping or polishing the adjacent surfaces forming the edges.

It is obvious that any additional devices described in connection with above examples such as incline angle adjustment devices, position adjustment devices, intensity monitoring devices as well as any beam conditioning devices may be implemented here.

## Claims

1. An optical device for generating a sharp illuminating line on a panel, said illuminating line being generated from a laser beam emitted by a high power laser and having a cross-section with long and short axes, said optical device comprising:
a beam separating optical element (2, 26, 92, 166, 204, 236, 272, 308, 484) for limiting an illuminating field of an incident optical beam (1, 24, 88, 140, 182, 222, 256, 292, 466) comprising:
a first surface (4, 28, 94, 170, 208, 240, 276, 312, 486) and a second surface (6, 30, 96, 172, 210, 242, 278, 314, 488), said first surface and said second surface enclosing an angle (γ) and forming an edge (8, 32, 100, 178, 214,246, 282, 380, 472), said edge spatially separating said incident optical beam (1, 24, 88, 140, 182, 222, 256, 292, 466) into at least two sub-beams (3, 34, 104, 146, 184, 226, 260, 294, 470; 5, 36, 106, 148, 186, 228, 262, 296, 472), said edge (8, 32, 100, 178, 214, 246, 282, 380, 472) having a deviation from a linearity, circle, ellipse or any shape predetermined of not more than 20 µm over a length of 1 m in said long axis direction,
said edge (8, 32, 100, 178, 214, 246, 282, 380, 472) being illuminated by said laser beam (1, 24, 88, 140, 182, 222, 256, 292, 466) and spatially limiting said laser beam in at least one direction of the short axis,
said long axis of said incident beam (1, 24, 88, 140, 182, 222, 256, 292, 466) and said linear edge of said beam separating optical element (2, 26, 92, 166, 204, 236, 272, 308, 484) forming a tilt angle (δ) in a plane perpendicular to the propagation direction of the incident optical beam,
**characterized in that**
the optical device comprising:
a position adjustment device (54) to adjust said tilt angle (δ) of said beam separating optical element (2, 26, 92, 166, 204, 236, 272, 308, 484) with respect to the incoming beam,
an intensity monitoring device (62) for monitoring the intensity of the incident optical beam (1, 24, 88, 140, 182, 222, 256, 292, 466) near said edge of said beam separating optical element and
a controlling device (58) for controlling the adjustment of said tilt angle (δ) in dependence of the intensity monitored by said intensity monitoring device (62).

2. The optical device of claim 1, wherein said edge (8, 32, 100, 78, 214, 246, 282, 380, 472) having a linear shape.

3. The optical device of one of claims 1 or 2, wherein one of said first surface (4, 28, 94, 170, 208, 240, 276, 312, 486) or said second surface (6, 30, 96, 172, 210, 242, 278, 314, 488) forming a plane of incidence, the normal vector of said plane of incidence and the propagation direction of the beam forming an angle of incidence (ε).

4. The optical device of claim 3, wherein said separating being accomplished by absorbing of at least one of said at least two sub-beams (3a, 5) or said separating being accomplished by refracting of at least one of said at least two sub-beams (3b, 3c, 3d; 5), wherein said angle of incidence (e) being Brewster's angle or a deviance from Brewster's angle not exceeding 5 degrees or most preferably not exceeding 2 degrees.

5. The optical device of one of claims 3 or 4, further comprising an angle of incidence adjusting device for adjusting the angle of incidence (ε) to a predetermined value.

6. The optical device of claim 5, wherein said predetermined value of said angle of incidence (ε) is Brewster's angle.

7. The optical device of claim 1, the position adjustment device being capable of adjusting the tilt angle (δ) to a predetermined value.

8. The optical device of claim 7, wherein said predetermined value of said tilt angle (δ) is 0 degrees.

9. The optical device of claim 1, wherein said separating being accomplished by refracting of at least one of said at least two sub-beams or said separating being accomplished by reflecting of at least one of said at least two sub-beams or said separating being accomplished by diffracting of at least one of said at least two sub-beams, the optical device further comprising a beam dump for fielding at least one of said at least two sub-beams.

10. The optical device of claim 1, wherein said beam separating optical element (2, 26, 92, 166, 204, 236, 272, 308, 484) further comprising:
another first surface (98) and another second surface (96), said another first surface (98) and said another second surface (96) enclosing another dihedral angle and forming another edge (102),
said another edge (102) spatially separating said incident optical beam (88) into at least another two sub-beams (106, 108), said another edge (102) having a linear shape, said another edge (102) being illuminated by said laser beam (88) and spatially limiting said laser beam (88) in the other direction of the short axis.

11. The optical device of claim 1, further comprising another beam separating optical element (168, 206, 238, 274, 310, 492), said another beam separating optical element (168, 206, 238, 274, 310, 492) comprising:
another first surface (174, 216, 250, 286, 320, 494) and another second surface (176, 218, 252, 284, 322, 496), said another first surface and said another second surface enclosing another dihedral angle and forming another edge (180, 215, 248, 290, 326, 474),
said another edge (180, 215, 248, 290, 326, 474) spatially separating said incident optical beam (140, 182, 222, 256, 292, 466) into at least another two sub-beams (150, 192, 230, 268, 298, 470; 154, 198, 232, 264, 300, 482), said another edge (180, 215, 248, 290, 326, 474) having a linear shape, said another edge (180, 215, 248, 290, 326, 474) being illuminated by said laser beam and spatially limiting said laser beam in the other direction of the short axis.

## Patentansprüche

1. Optische Einrichtung zur Erzeugung einer scharfen Beleuchtungslinie auf einer Tafel, wobei die Beleuchtungslinie von einem Laserstrahl erzeugt wird, der von einem Hochleistungslaser ausgegeben wird und einen Querschnitt mit einer langen und einer kurzen Achse aufweist, wobei die optische Einrichtung Folgendes umfasst:
ein strahlteilendes optisches Element (2, 26, 92, 166, 204, 236, 272, 308, 484) zum Begrenzen eines Beleuchtungsfelds eines einfallenden optischen Strahls (1, 24, 88, 140, 182, 222, 256, 292, 466), umfassend:
eine erste Oberfläche (4, 28, 94, 170, 208, 240, 276, 312, 486) und eine zweite Oberfläche (6, 30, 96, 172, 210, 242, 278, 314, 488), wobei die erste und die zweite Oberfläche einen Winkel (γ) einschließen und eine Kante (8, 32, 100, 178, 214, 246, 282, 380, 472) bilden, wobei diese Kante den einfallenden optischen Strahl (1, 24, 88, 140, 182, 222, 256, 292, 466) räumlich in mindestens zwei Teilstrahlen (3, 34, 104, 146, 184, 226, 260, 294, 470; 5, 36, 106, 148, 186, 228, 262, 296, 472) teilt, wobei die Kante (8, 32, 100, 178, 214, 246, 282, 380, 472) eine Abweichung von einer Linearität, einem Kreis, einer Ellipse oder einer anderen vorbestimmten Form von nicht mehr als 20 µm über eine Länge von 1 m in der Richtung der langen Achse aufweist,
wobei die Kante (8, 32, 100, 178, 214, 246, 282, 380, 472) von dem Laserstrahl (1, 24, 88, 140, 182, 222, 256, 292, 466) bestrahlt wird und den Laserstrahl in mindestens einer Richtung der kurzen Achse räumlich begrenzt,
wobei die lange Achse des einfallenden Strahls (1, 24, 88, 140, 182, 222, 256, 292, 466) und die lineare Kante des strahlteilenden optischen Elements (2, 26, 92, 166, 204, 236, 272, 308, 484) einen Kippwinkel (δ) in einer Ebene senkrecht zur Ausbreitungsrichtung des einfallenden optischen Strahls bilden,
**dadurch gekennzeichnet, dass**
die optische Einrichtung Folgendes umfasst:
eine Positionseinstelleinrichtung (54) zur Einstellung des Kippwinkels (δ) des strahlteilenden optischen Elements (2, 26, 92, 166, 204, 236, 272, 308, 484) bezüglich des ankommenden Strahls,
eine Intensitätsüberwachungseinrichtung (62) zur Überwachung der Intensität des einfallenden optischen Strahls (1, 24, 88, 140, 182, 222, 256, 292, 466) nahe der Kante des strahlteilenden optischen Elements und
eine Steuereinrichtung (58) zum Steuern der Einstellung des Kippwinkels (δ) in Abhängigkeit der von der Intensitätsüberwachungseinrichtung (62) überwachten Intensität.

2. Optische Einrichtung nach Anspruch 1, wobei die Kante (8, 32, 100, 178, 214, 246, 282, 380, 472) eine lineare Gestalt hat.

3. Optische Einrichtung nach Anspruch 1 oder 2, wobei die erste Oberfläche (4, 28, 94, 170, 208, 240, 276, 312, 486) oder die zweite Oberfläche (6, 30, 96, 172, 210, 242, 278, 314, 488) eine Einfallsebene bilden, und der Normalvektor dieser Einfallsebene und die Ausbreitungsrichtung des Strahls einen Einfallswinkel (ε) bilden.

4. Optische Einrichtung nach Anspruch 3, wobei das Teilen damit erreicht wird, dass mindestens einer der mindestens zwei Teilstrahlen (3a, 5) absorbiert wird, oder das Teilen damit erreicht wird, dass mindestens einer der mindestens zwei Teilstrahlen (3b, 3c, 3d; 5) gebrochen wird, wobei der Einfallswinkel (ε) der Brewster-Winkel ist, oder eine Abweichung vom Brewster-Winkel 5 Grad oder besonders bevorzugt 2 Grad nicht übersteigt.

5. Optische Einrichtung nach Anspruch 3 oder 4, ferner umfassend eine Einfallswinkeleinstelleinrichtung zum Einstellen des Einfallswinkels (ε) auf einen vorbestimmten Wert.

6. Optische Einrichtung nach Anspruch 5, wobei der vorbestimmte Wert des Einfallswinkels (ε) der Brewster-Winkel ist.

7. Optische Einrichtung nach Anspruch 1, wobei die Positionseinstelleinrichtung den Kippwinkel (δ) auf einen vorbestimmten Wert einstellen kann.

8. Optische Einrichtung nach Anspruch 7, wobei der vorbestimmte Wert des Kippwinkels (δ) 0 Grad ist.

9. Optische Einrichtung nach Anspruch 1, wobei das Teilen damit erreicht wird, dass mindestens einer der mindestens zwei Teilstrahlen gebrochen wird, oder das Teilen damit erreicht wird, dass mindestens einer der mindestens zwei Teilstrahlen reflektiert wird, oder das Teilen damit erreicht wird, dass mindestens einer der mindestens zwei Teilstrahlen gebeugt wird, wobei die optische Einrichtung ferner eine Strahlfalle zum Auffangen mindestens eines der mindestens zwei Teilstrahlen umfasst.

10. Optische Einrichtung nach Anspruch 1, wobei das strahlteilende optische Element (2, 26, 92, 166, 204, 236, 272, 308, 484) ferner Folgendes umfasst:
eine weitere erste Oberfläche (98) und eine weitere zweite Oberfläche (96), wobei die weitere erste Oberfläche (98) und die weitere zweite Oberfläche (96) einen weiteren diedrischen Winkel einschließen und eine weitere Kante (102) bilden,
wobei die weitere Kante (102) den einfallenden optischen Strahl (88) räumlich in mindestens zwei weitere Teilstrahlen (106, 108) teilt, wobei die weitere Kante (102) eine lineare Gestalt aufweist, wobei die weitere Kante (102) von dem Laserstrahl (88) bestrahlt wird und den Laserstrahl (88) in der anderen Richtung der kurzen Achse räumlich begrenzt.

11. Optische Einrichtung nach Anspruch 1, ferner umfassend ein weiteres strahlteilendes optisches Element (168, 206, 238, 274, 310, 492), umfassend:
eine weitere erste Oberfläche. (174, 216, 250, 286, 320, 494) und eine weitere zweite Oberfläche (176, 218, 252, 284, 322, 496), wobei die weitere erste Oberfläche und die weitere zweite Oberfläche einen weiteren diedrischen Winkel einschließen und eine weitere Kante (180, 215, 248, 290, 326, 474) bilden,
wobei die weitere Kante (180, 215, 248, 290, 326, 474) den einfallenden optischen Strahl (140, 182, 222, 256, 292, 466) räumlich in mindestens zwei weitere Teilstrahlen (150, 192, 230, 268, 298, 470; 154, 198, 232, 264, 300, 482) teilt, wobei die weitere Kante (180, 215, 248, 290, 326, 474) eine lineare Gestalt aufweist, wobei die weitere Kante (180, 215, 248, 290, 326, 474) von dem Laserstrahl bestrahlt wird und den Laserstrahl in der anderen Richtung der kurzen Achse räumlich begrenzt.

## Revendications

1. Dispositif optique destiné à générer une ligne d'éclairement nette sur un panneau, ladite ligne d'éclairement étant générée à partir d'un faisceau laser émis par un laser de forte puissance et ayant une section transversale présentant des axes long et court, ledit dispositif optique comprenant :
un élément optique de séparation de faisceaux (2, 26, 92, 166, 204, 236, 272, 308, 484) destiné à limiter un champ d'éclairement d'un faisceau optique incident (1, 24, 88, 140, 182, 222, 256, 292, 466), comprenant :
une première surface (4, 28, 94, 170, 208, 240, 276, 312, 486) et une seconde surface (6, 30, 96, 172, 210, 242, 278, 314, 488), ladite première surface et ladite seconde surface délimitant un angle (γ) et formant une arête (8, 32, 100, 178, 214, 246, 282, 380, 472), ladite arête séparant spatialement ledit faisceau optique incident (1, 24, 88, 140, 182, 222, 256, 292, 466) en au moins deux faisceaux secondaires (3, 34, 104, 146, 184, 226, 260, 294, 470 ; 5, 36, 106, 148, 186, 228, 262, 296, 472), ladite arête (8, 32, 100, 178, 214, 246, 282, 380, 472) présentant un écart à la linéarité, au cercle, à l'ellipse ou à une forme quelconque prédéterminée ne dépassant pas 20 µm sur une longueur de 1 m dans ladite direction de l'axe long, ladite arête (8, 32, 100, 178, 214, 246, 282, 380, 472) étant éclairée par ledit faisceau laser (1, 24, 88, 140, 182, 222, 256, 292, 466) et limitant spatialement ledit faisceau laser dans au moins une direction de l'axe court,
ledit axe long dudit faisceau incident (1, 24, 88, 140, 182, 222, 256, 292, 466) et ladite arête linéaire dudit élément optique de séparation de faisceaux (2, 26, 92, 166, 204, 236, 272, 308, 484) formant un angle d'inclinaison (δ) dans un plan perpendiculaire à la direction de propagation du faisceau optique incident, **caractérisé en ce que**
le dispositif optique comprend :
un dispositif d'ajustement de position (54) destiné à ajuster ledit angle d'inclinaison (δ) dudit élément optique de séparation de faisceaux (2, 26, 92, 166, 204, 236, 272, 308, 484) par rapport au faisceau entrant,
un dispositif de contrôle d'intensité (62) destiné à contrôler l'intensité du faisceau optique incident (1, 24, 88, 140, 182, 222, 256, 292, 466) à proximité de ladite arête dudit élément optique de séparation de faisceaux, et
un dispositif de commande (58) destiné à commander l'ajustement dudit angle d'inclinaison (δ) en fonction de l'intensité contrôlée par ledit dispositif de contrôle d'intensité (62).

2. Dispositif optique selon la revendication 1, dans lequel ladite arête (8, 32, 100, 178, 214, 246, 282, 380, 472) présente une forme linéaire.

3. Dispositif optique selon l'une des revendications 1 ou 2, dans lequel l'une de ladite première surface (4, 28, 94, 170, 208, 240, 276, 312, 486) et de ladite seconde surface (6, 30, 96, 172, 210, 242, 278, 314, 488) forment un plan d'incidence, le vecteur normal audit plan d'incidence et la direction de propagation du faisceau formant un angle d'incidence (ε).

4. Dispositif optique selon la revendication 3, dans lequel ladite séparation est effectuée par absorption d'au moins l'un desdits au moins deux faisceaux secondaires (3a, 5) ou ladite séparation s'effectue par réfraction d'au moins l'un desdits au moins deux faisceaux secondaires (3b, 3c, 3d ; 5), dans lequel ledit angle d'incidence (ε) est l'angle de Brewster ou dans lequel un écart à l'angle de Brewster ne dépasse pas 5 degrés ou, de façon particulièrement préférable, ne dépasse pas 2 degrés.

5. Dispositif optique selon l'une des revendications 3 ou 4, comprenant en outre un dispositif d'ajustement de l'angle d'incidence destiné à ajuster l'angle d'incidence (ε) à une valeur prédéterminée.

6. Dispositif optique selon la revendication 5, dans lequel ladite valeur prédéterminée dudit angle d'incidence (ε) est l'angle de Brewster.

7. Dispositif optique selon la revendication 1, dans lequel le dispositif d'ajustement de la position est capable d'ajuster l'angle d'inclinaison (δ) à une valeur prédéterminée.

8. Dispositif optique selon la revendication 7, dans lequel ladite valeur prédéterminée dudit angle d'inclinaison (δ) est de 0 degré.

9. Dispositif optique selon la revendication 1, dans lequel ladite séparation est effectuée par réfraction d'au moins l'un desdits au moins deux faisceaux secondaires ou ladite séparation est effectuée par réflexion d'au moins l'un desdits au moins deux faisceaux secondaires ou ladite séparation est effectuée par diffraction d'au moins l'un desdits au moins deux faisceaux secondaires, le dispositif optique comprenant en outre un absorbeur de faisceaux destiné à piéger au moins l'un desdits au moins deux faisceaux secondaires.

10. Dispositif optique selon la revendication 1, dans lequel ledit élément optique de séparation de faisceaux (2, 26, 92, 166, 204, 236, 272, 308, 484) comprend en outre :
une autre première surface (98) et une autre seconde surface (96), ladite autre première surface (98) et ladite autre seconde surface (96) délimitant un autre angle de dièdre et formant une autre arête (102),
ladite autre arête (102) séparant spatialement ledit faisceau optique incident (88) en au moins deux autres faisceaux secondaires (106, 108), ladite autre arête (102) ayant une forme linéaire, ladite autre arête (102) étant éclairée par ledit faisceau laser (88) et limitant spatialement ledit faisceau laser (88) dans l'autre direction de l'axe court.

11. Dispositif optique selon la revendication 1, comprenant en outre un autre élément de séparation de faisceaux (168, 206, 238, 274, 310, 492), ledit autre élément optique de séparation de faisceaux (168, 206, 238, 274, 310, 492) comprenant :
une autre première surface (174, 216, 250, 286, 320, 494) et une autre seconde surface (176, 218, 252, 284, 322, 496), ladite autre première surface et ladite autre seconde surface délimitant un autre angle de dièdre et formant une autre arête (180, 215, 248, 290, 326, 474),
ladite autre arête (180, 215, 248, 290, 326, 474) séparant spatialement ledit faisceau optique incident (140, 182, 222, 256, 292, 466) en au moins deux autres faisceaux secondaires (150, 192, 230, 268, 298, 470 ; 154, 198, 232, 264, 300, 482), ladite autre arête (180, 215, 248, 290, 326, 474) ayant une forme linéaire, ladite autre arête (180, 215, 248, 290, 326, 474) étant éclairée par ledit faisceau laser et limitant spatialement ledit faisceau laser dans l'autre direction de l'axe court.
